# EUROPÄISCHE PATENTSCHRIFT

(11) **EP 0 699 378 B1**
(45) Veröffentlichungstag und Bekanntmachung des Hinweises auf die Patenterteilung: **11.10.2000**
(21) Anmeldenummer: 95111321.6
(22) Anmeldetag: 19.07.1995
(51) Int. Cl.: A01C 23/00

(54) **Verfahren zur Mengendosierung beim Ausbringen von Gülle mittels einer fahrbaren Gülle-Ausbringvorrichtung und eine solche Ausbringvorrichtung**
Regulation system for metering the distribution of liquid manure in a moving manure distributor and distribution apparatus
Méthode de dosage de la quantité de purin distribué par un distributeur de purin roulant et appareil de distribution

(30) Priorität: 25.08.1994 DE 44300072 F
(43) Veröffentlichungstag der Anmeldung: 06.03.1996
(73) Patentinhaber: DeLaval BSA GmbH, D-95509 Marktschorgast (DE)
(72) Erfinder: Hacker, Otmar, D-95336 Mainleus (DE)
(74) Vertreter: Rau, Manfred, Dr. Dipl.-Ing.

(56) Entgegenhaltungen:
- DE-A- 3 120 470
- DE-A- 3 719 671
- DE-A- 4 130 817
- FR-A- 2 178 700
- US-A- 3 905 523

## Beschreibung

Die Erfindung betrifft ein Verfahren zur Mengendosierung beim Ausbringen von Gülle mittels einer fahrbaren Gülle-Ausbringvorrichtung und eine solche Ausbringvorrichtung selbst.

In der modernen Landwirtschaft erfolgt das Düngen von Feldern mit Gülle durch relativ aufwendige Gülle-Ausbringvorrichtungen, bei denen es sich insbesondere um Traktor-gezogene Gülle-Anhänger handelt. Es wird dabei durch noch zu erörternde Maßnahmen mit einer möglichst genauen Mengendosierung gearbeitet, um einen optimalen Düngeerfolg zu erreichen, insbesondere eine Überdüngung zu vermeiden und um die Nitratbelastung des Grundwassers möglichst niedrig zu halten.

Um den vorstehenden Anforderungen zu genügen, weisen moderne Gülle-Anhänger eine mit dem Gülle-Behälter in Verbindung stehende Fördereinrichtung, insbesondere eine Pumpe, sowie eine dieser nachgeordnete Dosiereinrichtung mit über ein Stellglied einstellbarer Durchflußmenge an Gülle auf. Bei der Dosiereinrichtung kann es sich um ein Drei-Wege-Ventil oder im Falle eines Vakuumtankwagens einen Ausflußschieber handeln.

Der Dosiereinrichtung ist ein Verteilgerät zum Ausbringen der Gülle auf den Acker nachgeordnet. Bei diesem Verteilgerät kann es sich um einen sogenannten "Schleppschlauchverteiler" oder einen Gülle-Grubber handeln, der die Gülle direkt über pflugscharartige Eintragswerkzeuge in die Ackerkrume einarbeitet.

Wie aus der DE 41 30 817 A1 bekannt ist, weist eine Gülle-Ausbringvorrichtung nach dem Stand der Technik ein Steuergerät zur Steuerung der Dosiereinrichtung auf, mit der die Soll-Durchflußmenge in Abhängigkeit betriebsrelevanter Eingabedaten der Ausbringvorrichtung, wie die flächenspezifische Soll-Ausbringmenge an Gülle, die Fahrgeschwindigkeit des Anhängers, die Arbeitsbreite des Verteilgerätes, der Behälterinhalt, die Schlaglänge oder dergleichen gesteuert wird. Das Steuergerät weist einen Mikroprozessor mit Speicher für ein entsprechendes Steuerprogramm und Daten, wie z.B. die genannten Eingabedaten, sowie eine Eingabeeinheit für diese und eine Treiberschaltung zur Ansteuerung der Dosiereinrichtung auf.

Bei dieser bekannten Ausbringvorrichtung wird nun die Durchflußmenge in aufwendiger Weise direkt geregelt, indem der Dosiereinrichtung - in diesem Fall ein 3-Wege-Hahn - ein Durchflußmengenmesser zugeordnet ist, der die jeweilige Durchflußmenge ermittelt und dem Steuergerät als Regelgröße zuführt.

Weiterhin sind bei der bekannten Vorrichtung eine sehr ausgefeilte taktweise Ansteuerung von Ventilen an dem Schleppschlauch-Verteilgerät sowie eine direkte Erfassung der Fahrgeschwindigkeit des Anhängers vorgesehen.

Zusammenfassend erfolgt bei der bekannten Gülle-Ausbringvorrichtung eine äußerst komplexe und vollautomatische Mengendosierung, die zwar mit hoher Perfektion arbeitet, jedoch einen erheblichen apparativen Aufwand erfordert. Dies erhöht die Investitionskosten zur Anschaffung einer solchen Gülle-Ausbringvorrichtung erheblich und beschränkt damit deren Einsatzmöglichkeiten auf Großbetriebe, Lohnunternehmer oder Maschinenringe.

Um nun die bekannten Probleme der Umweltbelastung bei der Gülle-Düngung durch eine übermäßige Ammoniakausgasung und Nitratbelastung des Grundwassers weiter zu reduzieren, müssen technische Lösungen für eine Mengendosierung gefunden werden, die konstruktiv weniger aufwendig und damit kostengünstiger sind, um auch von der Masse der mittleren und Kleineren landwirtschaftlichen Betriebe akzeptiert und eingesetzt werden zu können.

Ausgehend von der geschilderten Problematik liegt der Erfindung die Aufgabe zugrunde, ein Verfahren zur Mengendosierung beim Ausbringen von Gülle sowie eine danach arbeitende Gülle-Ausbringvorrichtung anzugeben, mit deren Hilfe eine für die Praxis ausreichend genaue Mengendosierung bei erheblich verringertem apparativen Aufbau möglich ist.

Die Lösung dieser Aufgabe ist in verfahrenstechnischer Hinsicht im Kennzeichnungsteil des Anspruches 1 und in vorrichtungstechnischer Hinsicht in den kennzeichnenden Merkmalen des Anspruches 6 angegeben. Die Erfindung geht dabei von der Erkenntnis aus, daß bei einer Dosiereinrichtung mit über ein Stellglied einstellbarer Durchflußmenge - beispielsweise also ein über einen Hahn steuerbares 3-Wege-Ventil oder ein Auslaufschieber in der Gülle-Leitung - jeder Position des Stellgliedes eine bestimmte Durchflußmenge zugeordnet werden kann, sofern mit einer konstanten, reproduzierbaren Förderleistung der der Dosiereinrichtung vorgeordneten Fördereinrichtung gearbeitet wird. Weiterhin liegt die Erkenntnis zugrunde, daß die Förderleistung von Verdrängerpumpen, wie sie in erster Linie als Fördereinrichtungen bei Gülle-Ausbringvorrichtungen verwendet werden, nur geringfügig vom Trockenmassegehalt der Gülle beeinflußt wird. So liegen die Differenzen in der Förderleistung zwischen Wasser und Gülle mit 8 % Trockenmasse im Bereich weniger Prozent.

Als Quintessenz dieser Erkenntnisse kann davon ausgegangen werden, daß bei einer bekannten konstanten Förderleistung der Fördereinrichtung eine über die Stellgliedposition reproduzierbare Durchflußmenge an der Dosiereinrichtung eingestellt werden kann.

Dies macht sich die Erfindung dahingehend zunutze, daß in einem sogenannten Vorbereitungsschritt des beanspruchten Verfahrens - also in der Regel vor der Erstinbetriebnahme der Gülle-Ausbringvorrichtung durch deren Hersteller - bei bekannter im wesentlichen konstanter Förderleistung der Fördereinrichtung die Durchflußmengenwerte der Dosiereinrichtung in Abhängigkeit der Stellung deren Stellgliedes ermittelt und nach Art einer Eichkurve oder -Tabelle im Speicher des Steuergerätes abgespeichert werden.

Im Praxiseinsatz der Ausbringvorrichtung berechnet dann das Steuergerät für einen bestimmten Ausbringvorgang den Soll-Durchflußmengenwert aus den betriebsrelevanten Eingabedaten, wie flächenspezifische Soll-Ausbringmenge an Gülle, Fahrgeschwindigkeit, Arbeitsbreite des Verteilgerätes, Behälterinhalt, Schlaglänge oder dergleichen, ermittelt durch Zugriff auf die Eichkurve oder -tabelle die zugehörige Soll-Stellung des Stellgliedes der Dosiereinrichtung und bringt das Stellglied in diese Soll-Stellung.

Damit ist gewährleistet, daß die Gülle mit der gewünschten flächenspezifischen Ausbringmenge verteilt wird.

Erkennbarerweise kann dabei auf einen aufwendigen Regelvorgang unter Einbeziehung eines Durchflußmengenmessers vollständig verzichtet werden, was das erfindungsgemäße Verfahren und die zugehörige Vorrichtung erheblich vereinfacht und damit kostengünstiger gestaltet. Dabei ist zu beachten, daß die Abhängigkeit der Durchflußmenge der Dosiereinrichtung von der Stellung ihres Stellgliedes nicht linear sein muß, sondern praktisch beliebig sein kann. Über die Eichkurve oder -tabelle kann jede solche beliebige Abhängigkeit erfaßt und für die Steuerung des Stellgliedes der Dosiereinrichtung verwendet werden.

Bei einer bevorzugten Ausführungsform des erfindungsgemäßen Verfahrens erfolgt die Mengendosierung durch eine entsprechende Ansteuerung des Schwenkhebels eines 3-Wege-Ventils, das als Dosiereinrichtung dient. Dabei ist entsprechend Anspruch 2 vorgesehen, daß in dem besagten Vorbereitungsschritt die Durchflußmengenwerte des 3-Wege-Ventils in Abhängigkeit der Schwenkwinkelstellung des Schwenkhebels ermittelt und nach Art einer Eichkurve oder -tabelle im Speicher des Steuergerätes abgespeichert werden. Bei einem Ausbringvorgang wird der motorisch verstellbare Schwenkhebel dann vom Steuergerät in seine aus der Eichkurve oder -tabelle ermittelte Soll-Schwenkwinkelstellung gebracht.

Damit eine Steuerung in dieser Weise funktioniert, benötigt das 3-Wege-Ventil eine Erfassungseinrichtung für den Schwenkwinkel des Schwenkhebels, also beispielsweise einen Schwenkwinkel-Taster, der dem jeweils eingestellten Schwenkwinkel entsprechende elektrische Signale abgibt.

Um dies zu vermeiden ist in der bevorzugten Weiterbildung des erfindungsgemäßen Verfahrens gemäß Anspruch 3 vorgesehen, daß die Schwenkwinkelstellungen des Schwenkhebels mittelbar über die Stellzeiten definiert werden, die für die Einstellung des Schwenkhebels aus dessen Schließposition in die jeweiligen Schwenkwinkelstellungen benötigt werden. Die Eichkurve oder -tabelle enthält also die jeweiligen Durchflußmengenwerte in Abhängigkeit der Stellzeiten, die von dem Stellmotor des Schwenkhebels benötigt werden, um diesen in eine Position mit dem jeweils entsprechenden Durchflußmengenwert einzustellen.

Nach Anspruch 4 ist die Verwendung unterschiedlicher Eichkurven oder -tabellen für unterschiedliche, jeweils konstante Förderleistungen der Fördereinrichtung vorgesehen. Damit können also Eichkurven oder -tabellen für z.B. verschiedene Pumpen im Steuergerät abgespeichert werden, so daß ein und dasselbe Steuergerät für unterschiedlich ausgelegte Gülle-Ausbringfahrzeuge einsetzbar ist. Für eine ordnungsgemäße Funktion ist lediglich die Förderleistung der verwendeten Pumpe dem Steuergerät mitzuteilen, was beispielsweise über codierte Stecker oder durch Eingabe über eine Eingabeeinheit am Steuergerät (Anspruch 5) möglich ist.

Die weiteren Ansprüche 6 bis 10 kennzeichnen eine erfindungsgemäß verfahrbare Gülle-Ausbringvorrichtung und deren vorteilhafte Weiterbildungen. Zu näheren Einzelheiten wird auf die nachfolgende Beschreibung eines Ausführungsbeispieles der Erfindung verwiesen.

Weitere Merkmale, Einzelheiten und Vorteile der Erfindung ergeben sich ebenfalls aus der nachfolgenden Beschreibung eines Ausführungsbeispieles, wobei auf die beigefügten Zeichnungen Bezug genommen wird. Es zeigen
- Fig. 1: eine Seitenansicht eines Gülle-Anhängers mit einem schematisch angedeuteten mehrteiligen Steuergerät,
- Fig. 2: ein Blockschaltbild dieses Steuergerätes und
- Fig. 3: ein Kurvenschaubild zweier Eichkurven für unterschiedliche Pumpen-Typen.

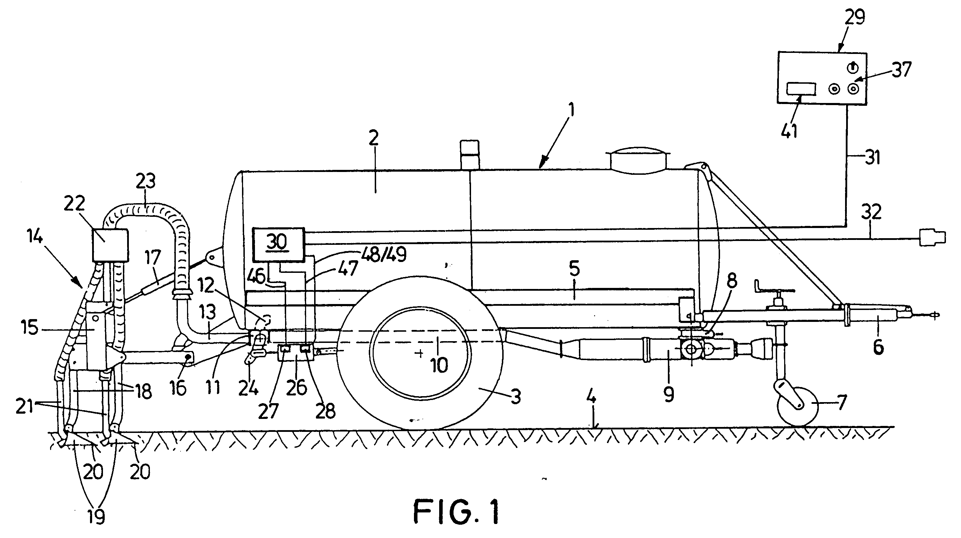

Wie in Fig. 1 erkennbar ist, weist ein fahrbarer Gülle-Anhänger 1 einen üblichen Güllebehälter 2 auf, der über ein einachsiges Fahrwerk 3 auf dem Boden 4 abgestützt ist. Der Behälter 2 ruht dabei auf einem Fahrzeugrahmen 5, der in Fahrtrichtung weisend mit einer Deichsel 6 zum Ankuppeln des Anhängers 1 an einen Ackerschlepper (nicht dargestellt) versehen ist. An der Deichsel 6 ist ein übliches Stützrad 7 angebracht, das aus der gezeigten Stützstellung in eine vom Boden abgehobene Fahrstellung überführbar ist.

Am vorderen Ende des Behälters 2 ist in dessen tiefster Position ein Auslaufstutzen 8 vorgesehen, an den eine übliche Verdrängerpumpe 9 vom Typ HD 200/120 der Anmelderin angeflanscht ist. Die Verdrängerpumpe 9 wird mittels eines üblichen Zapfwellen-Antriebes vom Ackerschlepper her angetrieben.

Von der Pumpe 9 führt eine Verbindungsleitung 10 nach hinten, wo am hinteren Ende des Güllebehälters 2 ein 3-Wege-Ventil 11 angeordnet ist. In dessen Eingang mündet die Verbindungsleitung 10. An seinem einen Ausgang ist ein Rücklaufstutzen 12 angeschlossen, der in den Behälter 2 zurückführt. An seinem zweiten Ausgang ist eine Ablaufleitung 13 angebracht, die zu einem als Ganzes mit 14 bezeichneten Gülle-Verteilgerät führt. Bei letzterem handelt es sich um einen sogenannten Grubber, der einen Tragrahmen 15 aufweist. Dieser ist um ein Gelenk 16 hochschwenkbar am Gülle-Anhänger 1 angebracht. Hierzu ist ein beispielsweise als hydraulisch oder pneumatisch beaufschlagbarer Kolben-Zylinder-Antrieb ausgebildeter Schwenkantrieb 17 einerseits am Tragrahmen 15 und andererseits am Güllebehälter 2 angelenkt.

Am Tragrahmen 15 sind nach unten ragende Tragarme 18 angebracht, an denen jeweils ein pflugscharartiges Grubber-Schar 19 angebracht ist. Diese sind in Draufsicht dreieckförmig ausgebildet und weisen eine in Arbeitsrichtung verlaufende Spitze 20 auf, von denen aus das jeweilige Grubber-Schar 19 nach hinten schräg ansteigt und zu ihren Seiten abfällt. Weiterhin ist am jeweiligen Tragarm 18 ein Verteilrohr (nicht näher dargestellt) angebracht, das jeweils an einen Verteilschlauch 21 angeschlossen ist. Die Verteilerschläuche 21 werden gemeinsam über einen Verteiler 22 mit Gülle versorgt, der über einen flexiblen Druckschlauch 23 mit der vom 3-Wege-Ventil 11 wegführenden Ablaufleitung 13 verbunden ist.

Weitere Angaben zur Ausgestaltung des Gülle-Verteilgerätes 14 in Form des kurz umrissenen Grubbers sind dem Gebrauchsmuster DE 90 00 461 U1 entnehmbar. In diesem Zusammenhang wird lediglich darauf hingewiesen, daß bei den vorliegenden Ausführungsbeispielen auf einen Durchflußmengenmesser, wie er in der Vorrichtung gemäß DE 90 00 461 U1 vorgesehen ist, verzichtet werden kann.

Als weitere Alternative für das Gülle-Verteilgerät ist u.a. auch ein Schleppschlauchverteilsystem denkbar, wie es Gegenstand der DE 92 05 671 U1 ist.

Wie in Fig. 1 weiterhin angedeutet ist, ist das 3-Wege-Ventil 11 durch einen Schwenkhebel 24 in seiner Durchflußmenge steuerbar. Zu seiner Verstellung ist der Schwenkhebel 24 über einen Lenker 25 mit einem elektrischen Hubspindelantrieb 26 gekoppelt, in den zwei Endlagenschalter 27, 28 integriert sind. Letztere geben ein entsprechendes elektrisches Signal ab, sobald sich der Spindelantrieb 26 und damit der Schwenkhebel 24 in einer ihrer Endlagen befindet, das 3-Wege-Ventil also entweder in Richtung zur Ablaufleitung 13 oder zum Rücklaufstutzen 12 vollständig geöffnet bzw. geschlossen ist.

Der Hubspindelantrieb 26 und damit das 3-Wege-Ventil 11 werden über ein Steuergerät 29 gesteuert, das auf dem (nicht dargestellten) Ackerschlepper angeordnet und mit einer am Gülle-Anhänger angebrachten Verstärkereinheit 30 über ein schematisch angedeutetes Steuerkabel 31 verbunden ist. Weiterhin wird die Verstärkereinheit 30 durch ein Stromversorgungskabel 32 vom Bordnetz des Ackerschleppers mit elektrischer Energie versorgt.

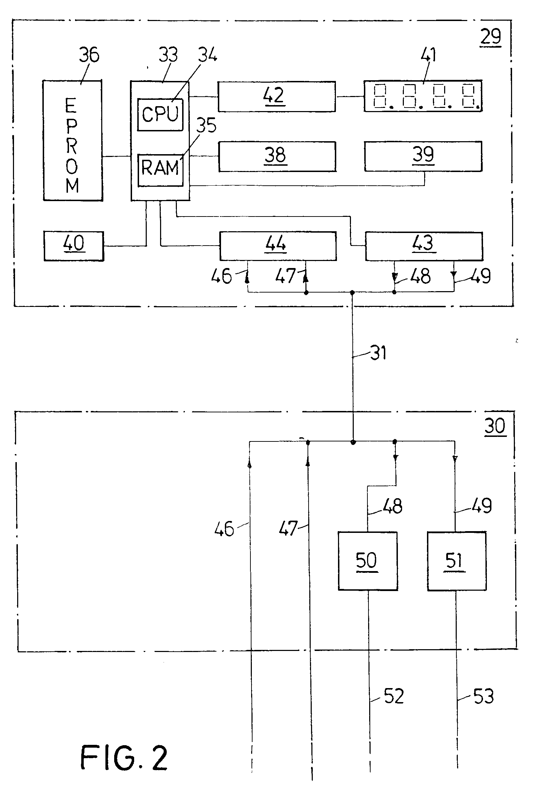

Fig. 2 macht den Aufbau des Mikroprozessor-gesteuerten Steuergerätes 29 mit Verstärkereinheit 30 deutlich. So weist das Steuergerät 29 einen üblichen Ein-Chip-Computer 33 mit zentraler Prozeßrecheneinheit 34 und Arbeitsspeicher 35 auf. Dem Ein-Chip-Computer 33 ist ein elektrisch programmierbarer Nur-Lese-Speicher (EPROM) 36 zugeordnet, in dem in üblicher Weise die Programmablauf-Software und verschiedene Daten abgespeichert sind, auf die noch näher eingegangen wird. Als mehrteilige Eingabe-Einheit 37 (s. Fig. 1) sind ein Taster 38, ein Tastschalter 39 sowie ein 8fach-Codierschalter 40 vorgesehen. Weiterhin ist eine Anzeigeeinheit in Form einer vierstelligen Siebensegmentanzeige 41 auf LED-Basis vorgesehen, die über eine übliche Treiberschaltung 42 mit dem Ein-Chip-Computer 33 verbunden ist.

Zur Übermittlung von Signalen von und zu der Verstärkereinheit 30 ist eine Ausgangsschaltung 43 bzw. Eingangsschaltung 44 im Steuergerät 29 vorgesehen. Die Verbindung zwischen der Ausgangs- bzw. Eingangsschaltung 43, 44 und der Verstärkereinheit 30 wird über das bereits erwähnte Steuerkabel 31 hergestellt, das zumindest vier Signalleitungen 46, 47, 48, 49 aufweist. Die beiden Signalleitungen 46, 47 sind mit der Eingangsschaltung 44 verbunden und den beiden Endlagenschaltern 27, 28 zugeordnet. Über die Signalleitung 46 wird somit dem Steuergerät 29 ein Signal übermittelt, wenn sich das 3-Wege-Ventil 11 in der einen Endlage befindet, in der es zur Ablaufleitung 13 vollständig geöffnet ist. Über die Signalleitung 47 wird ein Signal übermittelt, wenn sich das 3-Wege-Ventil 11 in der entgegengesetzten Endlage befindet, in der der Zweig zur Ablaufleitung 13 vollständig geschlossen und zum Rücklaufstutzen 12 vollständig geöffnet ist.

Die beiden Signalleitungen 48, 49, die über die Ausgangsschaltung 43 mit dem Ein-Chip-Computer 33 verbunden sind, dienen zur Steuerung des Hubspindelantriebes 26 über zwei Relais 50, 51 in der Verstärkereinheit 30. Von der Leistungsseite der Relais 50, 51 aus führen zwei Steuerleitungen 52, 53 zum Elektromotor des Hubspindelantriebes 26. Bei Ansteuerung des Relais 50 wird der Motor des Hubspindelantriebs 26 so in Bewegung gesetzt, daß das 3-Wege-Ventil 11 über den Schwenkhebel 20 in Richtung einer Öffnung zur Ablaufleitung 13 hin in Bewegung gesetzt wird. Umgekehrt wird bei einer Ansteuerung des Relais 51 das 3-Wege-Ventil 11 in die entgegengesetzte Richtung betätigt, so daß die Ablaufleitung 13 sukzessive geschlossen und der Rücklaufstutzen 12 entsprechend geöffnet wird.

Das erfindungsgemäße Verfahren zur Mengendosierung beim Ausbringen von Gülle wird anhand eines Ausführungsbeispieles wie folgt beschrieben:

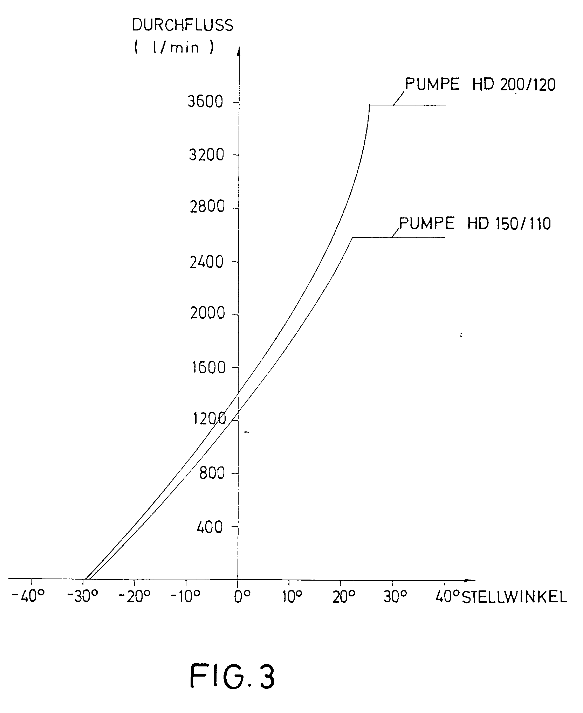

In einem Vorbereitungsschritt, wie er in erster Linie vom Hersteller des Gülle-Anhängers durchzuführen ist, werden bei bekannter, im wesentlichen konstanter Förderleistung der Verdrängerpumpe 9 die Durchflußmengenwerte des 3-Wege-Ventils 11 bezüglich des Förderstromes in die Ablaufleitung 13 in Abhängigkeit der Schwenkwinkelstellung des Schwenkhebels 24 ermittelt. Für eine Pumpe des eingangs genannten Typs HD 200/120 ergibt sich beispielsweise die in Fig. 3 mit einer durchgezogenen Kurve dargestellte Durchflußmengencharakteristik über einen Stellwinkel von - 30° bis + 40°. Wie daraus hervorgeht ist bei einem Stellwinkel von - 30° das 3-Wege-Ventil 11 in einer Stellung, in der der Auslaß zur Ablaufleitung 13 vollständig geschlossen und der Ablauf zum Rücklaufstutzen 12 vollständig geöffnet sind. Bei einer Änderung des Stellwinkels in Richtung höherer Werte steigt die in die Ablaufleitung 13 abgegebene Durchflußmenge überproportional an, bis bei einem Stellwinkel von etwa 20° der Auslauf zur Ablaufleitung 13 vollständig geöffnet und der zum Rücklaufstutzen 12 vollständig geschlossen. Die Durchflußmenge hat den durch die Verdrängerpumpe 9 vorgegebenen Wert von 3 600 l/min bei einer Nennweite von 125 mm des 3-Wege-Ventils 11 erreicht. Bei einer weiteren Erhöhung des Stellwinkels bis etwa 40° bleibt die Durchflußmenge konstant bei diesem Wert.

Wie aus Fig. 3 weiterhin entnehmbar ist, kann für einen anderen Pumpentyp, beispielsweise eine Pumpe des Typs HD 150/110 der Anmelderin mit einer Nennweite des 3-Wege-Ventils 11 von 100 mm eine zweite Durchflußmengencharakteristik ermittelt werden, die durch die strichlierte Kurve in Fig. 3 dargestellt ist. Hier beträgt die konstante Förderleistung der Verdrängerpumpe 9 etwa 2 600 l/min. Die Durchflußcharakteristik steigt wiederum von einem Stellwinkel von - 30° des Schwenkhebels 24 ausgehend überproportional an, um bei einem Stellwinkel von 20° den Maximalwert zu erreichen.

Die in Fig. 3 dargestellten Durchflußcharakteristiken können direkt als Wertepaare in den EPROM 36 des Steuergerätes 29 abgespeichert werden. In diesem Falle wäre jedoch ein Schwenkwinkelgeber am Schwenkhebel 24 notwendig, der dem Steuergerät 29 die jeweilige Schwenkwinkelstellung des Schwenkhebels 24 mitteilt. Um dies zu vermeiden ist in dem vorliegenden Ausführungsbeispiel vorgesehen, die Schwenkwinkelstellungen des Schwenkhebels 24 mittelbar über die Stellzeiten zu definieren, die für die Einstellung des 3-Wege-Ventils aus seiner Endstellung bei - 30° in die jeweilige Schwenkwinkelstellung für einen bestimmten Durchflußmengenwert benötigt wird. Es werden also in dem besagten Vorbereitungsschritt die Durchflußmengenwerte des 3-Wege-Ventils 11 in Abhängigkeit der Stellzeit ermittelt und die derart gewonnen Wertepaare nach Art einer Eichtabelle im EPROM 36 des Steuergerätes 29 für verschiedene Pumpentypen abgespeichert.

Beim Einsatz des Gülle-Anhängers vor Ort werden dann das Volumen des Gülle-Behälters 2 und die konstante Förderleistung der verwendeten Verdrängerpumpe 9 mittels des Codierschalters 40 in das Steuergerät 29 eingegeben. Weiterhin kann im Steuergerät 29 über den Taster 38 und den Tastschalter 39 die Arbeitsbreite des Gülle-Verteilgerätes 14 und die gewünschte Ausbringmenge an Gülle in m³/ha eingegeben werden. In üblicher Weise kann das Steuergerät 29 aufgrund dieser Eingaben mit seiner Software die optimale Fahrgeschwindigkeit des Gülle-Anhängers berechnen und über die Sieben-Segment-Anzeige 41 darstellen. Der Anwender übernimmt die vorgeschlagene Geschwindigkeit auf den Ackerschlepper oder ändert diese im vorgegebenen Rahmen z.B. zur Anpassung an eine vom Ackerschlepper vorgegebene Getriebeabstufung. Das Steuergerät 29 kann daraus in üblicher Weise den möglichen Fahrweg aufgrund der Eingabedaten von Ausbringmenge und Arbeitsbreite berechnen und diesen anzeigen. Um einen anderen Fahrweg zu erzielen, um z.B. den Tankinhalt an die sogenannte Schlaglänge anzupassen, können die vorgenannten Schritte mit abweichenden Daten wiederholt werden.

In Verfolgung des erfindungsgemäßen Verfahrens kann anschließend beim Arbeitsgang das Steuergerät 29 die zeitlich auszubringende Menge, also die Durchflußmenge in Liter/min aufgrund der Arbeitsbreite, der flächenspezifischen Ausbringmenge (m³/ha) und der gewählten Fahrgeschwindigkeit berechnen. Es ergibt sich beispielsweise eine Soll-Durchflußmenge von 2.400 l/min. Das Steuergerät 29 sucht aus der im EPROM 36 abgespeicherten Eichtabelle den zu diesem Durchflußmengenwert gehörenden Stellzeitwert (z.B. 5 sec.) und betätigt über die Ausgangsschaltung 43 das Relais 50 für diese Zeit. Ausgehend von der zur Ablaufleitung 13 geschlossenen Stellung des 3-Wege-Ventils 11 wird damit dessen Schwenkhebel 24 genau in die Position gefahren, in der der Durchflußmengenwert den gewünschten 2.400 l/min entspricht.

Erkennbar bringt das erfindungsgemäße Mengendosierverfahren und die entsprechende Gülleausbringvorrichtung ein hohes Maß an Bedienungs- und Steuerkomfort, ohne jedoch einen aufwendigen Durchflußmengenmesser und eine entsprechende Regelung des 3-Wege-Ventils 11 vorsehen zu müssen.

Letzteres ist bei den Dosierverfahren und Ausbringvorrichtungen nach dem Stand der Technik bei entsprechendem Bedienungs- und Steuerkomfort obligatorisch.

## Patentansprüche

1. Verfahren zur Mengendosierung beim Ausbringen von Gülle mittels einer fahrbaren Gülleausbringvorrichtung (Gülleanhänger 1) umfassend
- einen über ein Fahrwerk (3) auf dem Boden (4) abgestützten Güllebehälter (2),
- eine mit dem Behälter (2) in Verbindung stehenden Gülle-Fördereinrichtung (Verdrängerpumpe 9),
- eine mit der Fördereinrichtung (Verdrängerpumpe 9) verbundenen Dosiereinrichtung (3-Wege-Ventil 11) mit über ein Stellglied (Schwenkhebel 24) einstellbarer Durchflußmenge an Gülle,
- ein der Dosiereinrichtung (3-Wege-Ventil 11) nachgeordnetes Gülle-Verteilgerät (14) zum Ausbringen der Gülle auf dem Acker und
- ein Steuergerät (29) zur Steuerung der Dosiereinrichtung (3-Wege-Ventil 11) auf eine Soll-Durchflußmenge in Abhängigkeit betriebsrelevanter Eingabedaten der Ausbringvorrichtung, wie flächenspezifischer Soll-Ausbringmenge an Gülle, Fahrgeschwindigkeit, Arbeitsbreite des Verteilgerätes (14), Inhalt des Güllebehälters (2), Schlaglänge oder dergleichen, wobei das Mikroprozessor-gesteuerte Steuergerät
-- einen Speicher (EPROM 36) für ein Steuerprogramm und Daten,
-- eine Eingabeeinheit (37) für Betriebsdaten sowie
-- eine Treiberschaltung (Ausgangsschaltung 43) zur Ansteuerung des Stellgliedes (Schwenkhebel 24) der Dosiereinrichtung (3-Wege-Ventil 11) aufweist,
gekennzeichnet durch folgende Verfahrensschritte:
- in einem Vorbereitungsschritt werden bei bekannter, im wesentlichen konstanter Förderleistung der Fördereinrichtung (Verdrängerpumpe 9) die Durchflußmengenwerte der Dosiereinrichtung (3-Wege-Ventil 11) in Abhängigkeit der Stellung deren Stellgliedes (Schwenkhebel 24) ermittelt und nach Art einer Eichkurve oder -tabelle im Speicher (EPROM 36) des Steuergerätes (29) abgespeichert; und
- für einen Ausbringvorgang berechnet das Steuergerät (29) den Soll-Durchflußmengenwert aus den betriebsrelevanten Eingabedaten, ermittelt aus der Eichkurve oder -tabelle die zugehörige Soll-Stellung des Stellgliedes (Schwenkhebel 24) der Dosiereinrichtung (3-Wege-Ventil 11) und bringt das Stellglied (Schwenkhebel 24) in diese Soll-Stellung.

2. Verfahren nach Anspruch 1, wobei die Dosiereinrichtung ein mit einem Schwenkhebel (24) versehenes 3-Wege-Ventil (11) ist, dessen einer Eingang mit der Fördereinrichtung (Verdrängerpumpe 9) und dessen beiden Ausgänge mit dem Verteilgerät (14) bzw. dem Güllebehälter (2) verbunden sind, dadurch gekennzeichnet, daß in dem Vorbereitungsschritt die Durchflußmengenwerte des 3-Wege-Ventils (11) in Abhängigkeit der Schwenkwinkelstellung des Schwenkhebels (24) ermittelt und nach Art einer Eichkurve oder -tabelle im Speicher (EPROM 36) des Steuergerätes (29) abgespeichert werden, und daß bei einem Ausbringvorgang der motorisch verstellbare Schwenkhebel (24) vom Steuergerät (29) in seine aus der Eichkurve oder -tabelle ermittelte zugehörige Soll-Winkelstellung gebracht wird.

3. Verfahren nach Anspruch 2, dadurch gekennzeichnet, daß die Schwenkwinkelstellungen des Schwenkhebels (24) mittelbar über die Stellzeiten definiert werden, die für die Einstellung des 3-Wege-Ventils (11) aus dessen Endposition in die jeweiligen Schwenkwinkelstellungen benötigt werden.

4. Verfahren nach einem der Ansprüche 1 bis 3, dadurch gekennzeichnet, daß die Durchflußmengenwerte der Dosiereinrichtung (3-Wege-Ventil 11) für unterschiedliche, jeweils konstante Förderleistungen der Fördereinrichtung (Verdrängerpumpe 9) in Abhängigkeit der Stellung des Stellgliedes (Schwenkhebel 24) ermittelt und nach Art unterschiedlicher Eichkurven oder -tabellen im Speicher (EPROM 36) des Steuergerätes (29) abgespeichert werden.

5. Verfahren nach Anspruch 4, dadurch gekennzeichnet, daß zumindest die Förderleistung der am Gülle-Anhänger (1) verwendeten Pumpe (Verdrängerpumpe 9) über die Eingabeeinheit (37) des Steuergerätes (29) eingegeben wird.

6. Fahrbare Gülle-Ausbringvorrichtung, insbesondere Schlepper-gezogener Gülle-Anhänger (1), mit
- einem über ein Fahrwerk (3) auf den Boden (4) abgestützten Gülle-Behälter (2),
- einer mit dem Behälter (2) in Verbindung stehenden Gülle-Fördereinrichtung (Verdrängerpumpe (9),
- einer mit der Fördereinrichtung (Verdrängerpumpe 9) verbundenen Dosiereinrichtung (3-Wege-Ventil 11) mit über ein Stellglied (Schwenkhebel 24) einstellbarer Durchflußmenge an Gülle,
- einem der Dosiereinrichtung (3-Wege-Ventil 11) nachgeordneten Verteilgerät (14) zum Ausbringen der Gülle auf dem Acker,
- einem Steuergerät (29) zur Steuerung der Dosiereinrichtung (3-Wege-Ventil 11) auf eine Soll-Durchflußmenge in Abhängigkeit betriebsrelevanter Eingabedaten der Ausbringvorrichtung, wie flächenspezifischer Soll-Ausbringmenge an Gülle, Fahrgeschwindigkeit, Arbeitsbreite des Verteilgerätes (14), Behälterinhalt, Schlaglänge oder dergleichen, wobei das Mikroprozessor-gesteuerte Steuergerät (29)
-- einen Speicher (EPROM 36) für ein Steuerprogramm und Daten,
-- eine Eingabeeinheit (37) für Betriebsdaten sowie
-- eine Treiberschaltung (Ausgangsschaltung 43) zur Ansteuerung des Stellgliedes (Schwenkhebel 24) der Dosiereinrichtung (3-Wege-Ventil 11) aufweist,
dadurch gekennzeichnet,
- daß im Speicher (EPROM 36) des Steuergerätes (29) die Durchflußmengenwerte der Dosiereinrichtung (3-Wege-Ventil 11) nach Art einer Eichkurve oder -tabelle in Abhängigkeit der Stellung deren Stellgliedes (Schwenkhebel 24) gespeichert sind, und
- daß das Stellglied (Schwenkhebel 24) nach Berechnung der Soll-Durchflußmengenwertes durch das Steuergerät in seine aus der Eichkurve oder -tabelle ermittelte Soll-Stellung bringbar ist.

7. Gülleausbringvorrichtung nach Anspruch 6, dadurch gekennzeichnet, daß die Dosiereinrichtung ein 3-Wege-Ventil (11) mit Schwenkhebel (24) ist, dessen einer Eingang mit der Fördereinrichtung (Verdrängerpumpe 9) und dessen beiden Ausgänge mit dem Verteilgerät (14) bzw. dem Güllebehälter (2) verbunden sind, wobei die Durchflußmenge über die Schwenkwinkelstellung des Schwenkhebels (24) variierbar ist und die Durchflußmengenwerte des 3-Wege-Ventils (11) in Abhängigkeit der Schwenkwinkelstellung des Schwenkhebels im Speicher (EPROM 36) des Steuergeräts (29) gespeichert sind.

8. Gülleausbringvorrichtung nach Anspruch 7, dadurch gekennzeichnet, daß der Schwenkhebel einen elektrischen Antrieb, insbesondere einen elektrischen Hubspindelantrieb (26) zur Betätigung über das Steuergerät (29) aufweist.

9. Gülleausbringvorrichtung nach Anspruch 7 oder 8, dadurch gekennzeichnet, daß dem Schwenkhebel (24) zwei Endschalter zur Erfassung der Endlagen des 3-Wege-Ventils (11) zugeordnet sind.

10. Gülleausbringvorrichtung nach einem der Ansprüche 6 bis 9, dadurch gekennzeichnet, daß das Steuergerät (29) einen Codierschalter (40) zur Eingabe zumindest der Förderleistung der Fördereinrichtung (Verdrängerpumpe 9) aufweist.

## Claims

1. Method of quantity metering in the placement of liquid manure by means of a drivable manure applicator (liquid manure trailer 1), comprising
- a liquid manure tank (2) supported via a moving mechanism (3) on the ground (4);
- a liquid manure conveying device (displacement pump 9) communicating with the tank (2);
- a metering device (three-way valve 11) connected with the conveying device (displacement pump 9) and having a liquid manure throughput to be regulated by an actuator (pivoted lever 24);
- a liquid manure spreader (14) disposed downstream of the metering device (three-way valve 11) for the placement of the liquid manure on the field; and
- a control unit (29) for regulating a nominal throughput of the metering device (three-way valve 11) in dependence on operationally relevant input data of the liquid manure applicator, such as nominal placement quantity of liquid manure per area unit, driving speed, width of operation of the spreader (14), contents of the liquid manure tank (2), length of lay or the like, the microprocessor controlled control unit comprising
-- a memory (EPROM 36) for a control program and data,
-- an input unit (37) for operational data, as well as
-- a driver circuit (output circuit 43) for triggering the actuator (pivoted lever 24) of the metering device (three-way valve 11);
characterized by the following method steps:
- given a known, substantially constant conveying capacity of the conveying device (displacement pump 9), the throughputs of the metering device (three-way valve 11) are detected in dependence on the position of the actuator (pivoted lever 24) thereof in a preparatory step and stored in the way of a calibration curve or table in the memory (EPROM 36) of the control unit (29); and
- for a placement job, the control unit (29) computes the nominal throughput from the operationally relevant input data, it detects the associated nominal position of the actuator (pivoted lever 24) of the metering device (three-way valve 11) from the calibration curve or table, and it moves the actuator (pivoted lever 24) into this nominal position.

2. Method according to claim 1, wherein the metering device is a three-way valve (11) which is provided with a pivoted lever (24) and an inlet of which is connected with the conveying device (displacement pump 9) and the two outlets of which are connected with the spreader (14) and the liquid manure tank (2), respectively, characterized in that in the preparatory step, the throughputs of the three-way valve (11) are detected in dependence on the pivoting angle of the pivoted lever (24) and stored in the way of a calibration curve or table in the memory (EPROM 36) of the control unit (29); and in that during a placement job, the motor adjustable pivoted lever (24) is moved by the control unit (29) into its associated nominal angle which is detected from the calibration curve or table.

3. Method according to claim 2, characterized in that the pivoting angles of the pivoted lever (24) are defined indirectly via the actuation times which are needed for the adjustment of the three-way valve (11) from its stop position into the respective pivoting angles.

4. Method according to one of claims 1 to 3, characterized in that the throughputs of the metering device (three-way valve 11) are detected for various, in each case constant conveying capacities of the conveying device (displacement pump 9) in dependence on the position of the actuator (pivoted lever 24) and are stored in the way of varying calibration curves or tables in the memory (EPROM 36) of the control unit (29).

5. Method according to claim 4, characterized in that at least the conveying capacity of the pump (displacement pump 9) used on the liquid manure trailer (1) is fed in via the input unit (37) of the control unit (29).

6. Drivable liquid manure applicator, in particular tractor driven liquid manure trailer (1), comprising
- a liquid manure tank (2) supported via a moving mechanism (3) on the ground (4);
- a liquid manure conveying device (displacement pump 9) communicating with the tank (2);
- a metering device (three-way valve 11) connected with the conveying device (displacement pump 9) and having a liquid manure throughput to be regulated by an actuator (pivoted lever 24);
- a liquid manure spreader (14) disposed downstream of the metering device (three-way valve 11) for the placement of the liquid manure on the field; and
- a control unit (29) for regulating a nominal throughput of the metering device (three-way valve 11) in dependence on operationally relevant input data of the liquid manure applicator, such as nominal placement quantity of liquid manure per area unit, driving speed, width of operation of the spreader (14), contents of the liquid manure tank (2), length of lay or the like, the microprocessor controlled control unit comprising
-- a memory (EPROM 36) for a control program and data,
-- an input unit (37) for operational data, as well as
-- a driver circuit (output circuit 43) for triggering the actuator (pivoted lever 24) of the metering device (three-way valve 11);
characterized
- in that in the memory (EPROM 36) of the control unit (29), the throughputs of the metering device (three-way valve 11) are stored in the way of a calibration curve or table in dependence on the position of the actuator (pivoted lever 24) thereof; and
- in that after computation of the nominal throughputs, the actuator (pivoted lever 24) is movable by the control unit into its nominal position detected from the calibration curve or table.

7. Liquid manure applicator according to claim 6, characterized in that the metering device is a three-way valve (11) with a pivoted lever (24), an inlet of which is connected with the conveying device (displacement pump 9) and the two outlets of which are connected with the spreader (14) and the liquid manure tank (2), respectively, the throughput being variable via the pivoting angle of the pivoted lever (24), and the throughputs of the three-way valve (11) being stored in the memory (EPROM 36) of the control unit (29) in dependence on the pivoting angle of the pivoted lever.

8. Liquid manure applicator according to claim 7, characterized in that the pivoted lever comprises an electric drive, in particular an electric lifting spindle drive (26), to be actuated via the control unit (29).

9. A liquid manure applicator according to claim 7 or 8, characterized in that two stop switches are allocated to the pivoted lever (24) for detection of the stop positions of the three-way valve (11).

10. Liquid manure applicator according to one of claims 6 to 9, characterized in that the control unit (29) comprises a coding switch (40) for the input of at least the conveying capacity of the conveying device (displacement pump 9).

## Revendications

1. Procédé pour le dosage de quantité lors de l'épandage de purin par le moyen d'un épandeur de purin roulant (remorque de purin 1), comportant
- un réservoir de purin (2) supporté sur le sol (4) par l'intermédiaire d'un mécanisme de roulement (3);
- un convoyeur de purin (pompe volumétrique 9) communiquant avec le réservoir (2);
- un dispositif de dosage (vanne à trois voies 11) raccordé au convoyeur (pompe volumétrique 9) et ayant un débit de purin réglable par l'intermédiaire d'un vérin (levier pivotant 24);
- un distributeur de purin (14) disposé en aval du dispositif de dosage (vanne à trois voies 11) pour [épandage du purin sur le champ; et
- une unité de commande (29) pour le réglage du dispositif de dosage (vanne à trois voies 11) à un débit nominal en fonction de données d'entrée de l'épandeur qui relèvent de son fonctionnement, comme la quantité nominale d'épandage de purin en fonction de la surface, la vitesse de roulage, la largeur d'opération du distributeur (14), le contenu du réservoir de purin (2), la longueur du tour ou analogue, l'unité de commande pilotée à microprocesseur ayant
-- une mémoire (EPROM 36) pour un programme de gestion et pour des données,
-- une unité d'entrée (37) des données d'opération ainsi
-- qu'un circuit d'attaque (circuit de sortie 43) pour l'excitation du vérin (levier pivotant 24) du dispositif de dosage (vanne à trois voies 11);
caractérisé par les étapes suivantes:
- dans une étape préparatoire et étant donné une capacité connue et essentiellement constante du convoyeur (pompe volumétrique 9), les débits du dispositif de dosage (vanne à trois voies 11) sont détectés en fonction de la position du vérin (levier pivotant 24) de celui-ci et conservés à la façon d'une courbe ou table d'étalonnage dans la mémoire (EPROM 36) de l'unité de commande (29); et
- pour un procédé d'épandage, l'unité de commande (29) calcule le débit nominal à partir des données d'entrée qui relèvent du fonctionnement, détermine la position nominale conjuguée du vérin (levier pivotant 24) du dispositif de dosage (vanne à trois voies 11) à partir de la courbe ou table d'étalonnage, et met le vérin (levier pivotant 24) dans cette position nominale.

2. Procédé selon la revendication 1, dans lequel le dispositif de dosage est une vanne à trois voies (11) pourvue d'un levier pivotant (24), dont une entrée est reliée au convoyeur (pompe volumétrique 9) et dont les deux sorties sont reliées au distributeur (14), respectivement au réservoir de purin (2), caractérisé en ce que dans l'étape préparatoire, les débits de la vanne à trois voies (11) sont détectés en fonction de la position angulaire de pivotement du levier pivotant (24) et conservés à la façon d'une courbe ou table d'étalonnage dans la mémoire (EPROM 36) de l'unité de commande (29); et en ce que lors d'un procédé d'épandage, le levier pivotant (24) à ajustage à moteur est mis, par l'unité de commande (29), dans sa position angulaire nominale conjuguée qui est détectée à partir de la courbe ou table d'étalonnage.

3. Procédé selon la revendication 2, caractérisé en ce que les positions angulaires de pivotement du levier pivotant (24) sont définies indirectement par l'intermédiaire des temps d'ajustage qui sont nécessaires pour l'ajustage de la vanne à trois voies (11) à partir de sa position extrême dans les positions angulaires de pivotement respectives.

4. Procédé selon l'une des revendications 1 à 3, caractérisé en ce que les débits du dispositif de dosage (vanne à trois voies 11) sont détectés pour différentes capacités constantes du convoyeur (pompe volumétrique 9) en fonction de la position du vérin (levier pivotant 24) et sont conservés à la façon de différentes courbes ou tables d'étalonnage dans la mémoire (EPROM 36) de l'unité de commande (29).

5. Procédé selon la revendication 4, caractérisé en ce qu'au moins la capacité de la pompe (pompe volumétrique 9) utilisée sur la remorque de purin (1) est entrée par l'intermédiaire de mité d'entrée (37) de l'unité de commande (29).

6. Epandeur de purin roulant, en particulier remorque de purin tirée à tracteur, comportant
- un réservoir de purin (2) supporté sur le sol (4) par l'intermédiaire d'un mécanisme de roulement (3);
- un convoyeur de purin (pompe volumétrique 9) communiquant avec le réservoir (2);
- un dispositif de dosage (vanne à trois voies 11) raccordé au convoyeur (pompe volumétrique 9) et ayant un débit de purin réglable par l'intermédiaire d'un vérin (levier pivotant 24);
- un distributeur de purin (14) disposé en aval du dispositif de dosage (vanne à trois voies 11) pour l'épandage du purin sur le champ; et
- une unité de commande (29) pour le régalage du dispositif de dosage (vanne à trois voies 11) à un débit nominal en fonction de données d'entrée de l'épandeur qui relèvent de son fonctionnement comme la quantité nominale d'épandage de purin en fonction de la surface, la vitesse de roulage, la largeur d'opération du distributeur (14), le contenu du réservoir de purin (2), la longueur du tour ou analogue, l'unité de commande pilotée à microprocesseur ayant
-- une mémoire (EPROM 36) pour un programme de gestion et pour des données,
-- une unité d'entrée (37) des données d'opération ainsi
-- qu'un circuit d'attaque (circuit de sortie 43) pour l'excitation du vérin (levier pivotant 24) du dispositif de dosage (vanne à trois voies 11);
caractérisé en ce que
- dans la mémoire (EPROM 36) de l'unité de commande (29), les débits du dispositif de dosage (vanne à trois voies 1) sont conservés à la façon d'une courbe ou table d'étalonnage en fonction de la position du vérin (levier pivotant 24) de celui-ci; et
- en ce qu'après le calcul du débit nominal, le vérin (levier pivotant 24) est réglable par l'unité de commande dans sa position nominale déterminée à partir de la courbe ou table d'étalonnage.

7. Epandeur de purin selon la revendication 6, caractérisé en ce que le dispositif de dosage est une vanne à trois voies (11) avec un levier pivotant (24), dont une entrée est reliée au convoyeur (pompe volumétrique 9) et dont les deux sorties sont reliées au distributeur (14), respectivement au réservoir de purin (2), le débit étant variable par l'intermédiaire de la position angulaire de pivotement du levier pivotant (24) et les débits de la vanne à trois voies (11) étant conservés en fonction de la position angulaire de pivotement du levier pivotant dans la mémoire (EPROM 36) de l'unité de commande (29).

8. Epandeur de purin selon la revendication 7, caractérisé en ce que le levier pivotant comporte une commande électrique, en particulier une commande à tige de montée et descente (26), actionnée par l'intermédiaire de l'unité de commande (29).

9. Epandeur de purin selon la revendication 7 ou 8, caractérisé en ce que deux commutateurs de fin de course pour la détection des fins de course de la vanne à trois voies (11) sont conjugués au levier pivotant (24).

10. Epandeur de purin selon l'une des revendications 6 à 9, caractérisé en ce que l'unité de commande (29) comporte un commutateur de codage (10) pour l'entrée au moins de la capacité du convoyeur (pompe volumétrique 9).
